(19) Europäisches Patentamt
European Patent Office
Office européen des brevets

(11) Veröffentlichungsnummer: **0 026 314**
**A1**

(12) **EUROPÄISCHE PATENTANMELDUNG**

(21) Anmeldenummer: 80104887.7

(22) Anmeldetag: 16.08.80

(51) Int. Cl.$^3$: C 08 G 8/18
B 01 F 17/52
//C14C3/20

(30) Priorität: 30.08.79 DE 2934980

(43) Veröffentlichungstag der Anmeldung:
08.04.81 Patentblatt 81/14

(84) Benannte Vertragsstaaten:
CH DE FR GB LI

(71) Anmelder: BAYER AG
Zentralbereich Patente, Marken und Lizenzen
D-5090 Leverkusen 1, Bayerwerk(DE)

(72) Erfinder: Reitz, Gunther, Dr.
Andreas-Gryphius-Strasse 20
D-5000 Koeln 80(DE)

(72) Erfinder: Kasper, Vaclav
Morgengraben 2
D-5000 Koeln 80(DE)

(72) Erfinder: Jakobs, Karlhans
An der Jüch 55
D-5060 Bergisch Gladbach 2(DE)

(72) Erfinder: Schaupp, Kurt, Dr.
Leopold-Gmelin-Strasse 64
D-5000 Koeln 80(DE)

(54) **Phenol-Formaldehyd-Kondensate, ihre Herstellung und Verwendung als Dispergiermittel, Verflüssiger und Gerbstoffe.**

(57) Polykondensate aus Phenolen und Formaldehyd, die Sulfonsäuregruppen und deren Salze enthalten, die sowohl direkt als auch über eine Methylenbrücke an das Phenol gebunden sind, werden durch Umsetzung eines neutralisierten Reaktionsproduktes aus Phenolen mit Sulfonierungsmitteln, das eine Mischung von Ausgangsphenol, Phenolsulfonsäure und Bis-(hydroxyphenyl)- sulfonen enthält, mit Formaldehyd und einem Bisulfit bei einem pH-Wert von 4 - 8 hergestellt.

EP 0 026 314 A1

Croydon Printing Company Ltd.

BAYER AKTIENGESELLSCHAFT 5090 Leverkusen-Bayerwerk
Zentralbereich
Patente Marken und Lizenzen

# Phenol-Formaldehyd-Kondensate, ihre Herstellung und Verwendung als Dispergiermittel, Verflüssiger und Gerbstoffe

Gegenstand der Erfindung sind Polykondensate aus Phenolen und Formaldehyd, die Sulfonsäuregruppen und deren Salze enthalten, die sowohl direkt als auch über eine Methylengruppe an das Phenol gebunden sind. Die Polykondensate sind dadurch gekennzeichnet, daß sie durch Umsetzung eines neutralisierten Reaktionsproduktes aus Phenolen mit Sulfonierungsmitteln, das eine Mischung von Ausgangsphenol, Phenolsulfonsäuren und Bis-(hydroxyphenyl)-sulfonen enthält, mit Formaldehyd und einem Bisulfit bei einem pH-Wert von 4 - 8, bevorzugt 4,5 - 7,5 hergestellt werden.

Unter Phenolen werden insbesondere ein- und zweikernige Verbindungen verstanden. Bevorzugt sind nichtkondensierte Phenole. Die zweikernigen nichtkondensierten Phenole können direkt oder über eine Alkylengruppe miteinander verbunden sein.

Bevorzugt sind Phenol, Alkylphenole, insbesondere solche mit 1 - 9 Kohlenstoffatomen in der Alkylkette wie Kresole und Nonylphenol, Bisphenole wie

Bis-(hydroxyphenyl)-propan, und Hydroxybiphenyl. Besonders bevorzugt sind Phenol und m-Kresol. Die phenolischen Verbindungen können mit Formaldehyd, z.B. mit wäßriger 20 - 40 %iger Formaldehydlösung, oder mit Paraformaldehyd, zu bekannten Polykondensaten verknüpft werden.

Als Bisulfite werden Alkali-, Erdalkali- oder Ammoniumsalze, insbesondere $NaHSO_3$, $Na_2S_2O_5$, $KHSO_3$, und Ca/ $2 \cdot HSO_3$, verwendet.

In den erfindungsgemäßen Polykondensaten sind die Gruppen

$$-SO_3\ M \qquad (I)$$

und

$$-CH_2\ -SO_3M \qquad (II)$$

mit M = H, Na, K, Li, Ca/2, Mg/2, $\overset{+}{N}R_4$ ,worin

R = Alkyl $C_{1-6}$, eventuell durch Hydroxy substituiert, wobei die Reste R untereinander gleich oder verschieden sein können,

mit den Benzolringen verbunden.

Das Verhältnis der Gruppen (I) zu den Gruppen (II) ist beliebig, bevorzugt liegt es bei ($\frac{1}{3}$ bis 3) Mol (I) zu 1 Mol (II). Das Molverhältnis der phenolischen Verbindungen im obengenannten Sinne zur Summe der Gruppen (I) und (II) liegt bei 1:1,1 bis 1:0,5, bevorzugt bei 1:1,0 bis 1:0,6.

Gegenstand der Erfindung ist weiterhin ein Verfahren zur Herstellung der erfindungsgemäßen Polykondensate durch Umsetzung der neutralisierten Reaktionsprodukte von Phenolen und Sulfonierungsmitteln mit Formaldehyd und Bisulfit bei einem pH-Wert von 4 - 8.

Man arbeitet nach einem Einkesselverfahren, bei dem das Phenol mit einem Sulfonierungsmittel umgesetzt wird, das Sulfonierungsprodukt auf einen pH-Wert von 7 - 8 neutralisiert und anschließend mit Formaldehyd und Bisulfit bei einem pH-Wert von 4 - 8 umgesetzt wird.

Ein bevorzugtes Molverhältnis des Phenols zu Sulfonierungsmittel zu Bisulfit zu Formaldehyd ist 1:(0,3-0,8):(0,3-0,8):(1-3).

Als Sulfonierungsmittel werden z.B. Chlorsulfonsäure, Oleum und bevorzugt Schwefelsäure verwendet.

Nach einem bevorzugten Verfahren werden nach der Neutralisation mit 0,6 bis 2 Mol Formaldehyd pro Mol der phenolischen Komponente bei einem pH-Wert von 7 - 8 und anschließend mit 0,3 bis 0,8 Mol Bisulfit und 0 bis 1,5 Mol Formaldehyd bei pH 4 - 8 umgesetzt.

Im einzelnen wird das bevorzugte Verfahren wie folgt durchgeführt:

Die phenolische Verbindung wird mit dem Sulfonierungsmittel bei Temperaturen von 30 - 180°C umgesetzt, wobei die Sulfonsäure

$$P\text{-}SO_3\ M \qquad (III)$$

worin M die obengenannte Bedeutung hat und P als Abkürzung für die phenolische Verbindung steht,

und das Bis-(hydroxyphenyl)-sulfon

$$P\text{-}SO_2\text{-}P \qquad (IV)$$

wobei P die obengenannte Bedeutung hat, entstehen.

Das Molverhältnis von phenolischer Verbindung zum Sulfonierungsmittel liegt innerhalb des vorstehend genannten Molverhältnisses besonders bevorzugt bei 1:(0,4 - 0,7). Entstehendes Kondensationswasser wird bei

der Sulfonierung abdestilliert. Mit zunehmendem Reaktionsablauf nimmt der Säuregehalt der Reaktionsmischung ab, so daß sich der Fortlauf titrimetrisch bestimmten läßt. Bei einer Reaktion von Phenol und $H_2SO_4$ wird die Sulfonierung am günstigsten dann beendet, wenn in der Reaktionsmischung noch zwischen 25 und 45 %, bevorzugt zwischen 30 und 40 % der zu Anfang eingesetzten Säureäquivalente titrierbar sind. Bevorzugt ist dasjenige Verfahren, das zur Bildung eines Gemisches von Verbindungen (III), (IV) und Ausgangsphenol im Molverhältnis (0,25-0,45) (0,05-0,25) (0,1-0,7) führt.

Der zweite Schritt des Herstellungsverfahrens ist die Neutralisation der gebildeten Reaktonsmischung auf einen pH-Wert von 7-8, bevorzugt von 7- 7,5. Als Neutralisierungsmittel kann man beliebige Basen und Laugen verwenden, bevorzugt sind Natronlauge, Kalilauge, Kalkmilch.

Die so gebildete Mischung aus neutralisierter Sulfonsäure, aus Sulfon und nicht umgesetzter phenolischer Verbindung wird im folgenden mit Formaldehyd und einem Bisulfit zu den erfindungsgemäßen Kondensaten umgesetzt. Bevorzugt ist das Verfahren, dessen auf die Neutralisation folgender Reaktionsschritt, also der dritte, aus einer Umsetzung mit wäßriger 20 - 40 %iger Formaldehydlösung besteht. Diese Umsetzung wird bei 60°C bis Siedetemperatur, bevorzugt bei 80°C bis Sie-



BAD ORIGINAL

detemperatur innerhalb von 10 Minuten bis 3 Stunden, bevorzugt 30 Minuten bis 2 Stunden mit 0,6 bis 2 Mol Formaldehydlösung pro Mol phenolischer Verbindung, bevorzugt 0,8 bis 1,1 Mol, durchgeführt. Bei dieser Reaktion bilden sich insbesondere Methylolverbindungen der Sulfonsäuren (III), der Sulfone (IV) und der noch vorhandenen phenolischen Ausgangsverbindung(en).

Der vierte Verfahrensschritt ist die Umsetzung mit Bisulfitsalz, z.B. mit wäßriger $NaHSO_3$-Lösung bei 80°C bis 120°C, bevorzugt bei 100 - 110°C über einen Zeitraum von 30 Minuten bis 5 Stunden, bevorzugt 1 bis 3 Stunden bei einem pH-Wert von 4 - 8, bevorzugt 4,5 - 7,5. Das Molverhältnis von phenolischer(en) Ausgangsverbindung(en) zu Bisulfit liegt bei 1:(0,8 bis 0,3), bevorzugt bei 1:(0,7 bis 0,4). Bei dieser Reaktion setzen sich die Methylolgruppen, die an die Sulfonsäuregruppen und Sulfongruppen enthaltenden Phenole und an die phenolische(n) Ausgangsverbindung(en) gebunden sind mit dem Bisulfit zu den Gruppen (II) um, so daß nun die phenolischen Ausgangsverbindungen erfindungsgemäß die Gruppen (I) und (II) gebunden enthalten.

Das Verhältnis von bis jetzt zugesetztem Formaldehyd und Bisulfit ist bevorzugt 1:(1-1,4).

Der letzte Verfahrensschritt ist die Kondensation der wie oben beschrieben erhaltenen Verbindungen zu hochmolekularen Verbindungen, wobei bevorzugt weitere (0,8-1,5) Mol Formaldehyd pro Mol phenolischer Verbindung zugesetzt werden. Diese Kondensation läuft

bei 100 bis 180°C, bevorzugt 100 bis 160°C, ab und dauert 2 bis 10, bevorzugt 4 - 6 Stunden. Bei der Nachkondensation können auch Verbindungen zugesetzt werden, die in der Lage sind, mit wenigstens zwei Äquivalenten Formaldehyd zu reagieren, z.B. stickstoffhaltige Verbindungen wie Harnstoff, Amine oder Amide oder auch enolisierbare Verbindungen wie Aceton, Cyclohexanon oder andere Ketone.

Es fallen 20 bis 50 %ige wäßrige Lösungen an, die sich zu sprödem Produkt eintrocknen lassen, das gut wieder aufgelöst werden kann.

Der besondere Vorteil des Verfahrens liegt darin, daß es bei einem pH-Wert unter 8, bevorzugt unter 7,5, verläuft. Dadurch ist gewährleistet, daß die gesamte Reaktion bei technischer Durchführung in einem einzigen Kessel, z.B. einem Emaillekessel, durchgeführt werden kann. Dies ist bei einer derartigen Kondensation nach dem Stand der Technik nicht möglich, insbesondere deswegen, weil die Kondensation phenolischer Verbindungen mit Sulfit und Formaldehyd bisher stets bei alkalischem pH-Wert durchgeführt wurde, da die Kondensation bei nichtalkalischem pH-Wert erfahrungsgemäß zur Bildung unlöslicher Phenolharze führte. Weiter soll darauf hingewiesen werden, daß die im Verfahren beschriebene Reaktionfolge sowie die Molverhätnisse für das Gelingen der Reaktion eine große Rolle spielt.

Gegenstand der Erfindung sind auch die Verwendung der



BAD ORIGINAL

erfindungsgemäßen Kondensate und sie enthaltende Mittel.

Die erfindungsgemäßen Verbindungen sind ausgezeichnete Dispergiermittel für organische und anorganische Substanzen in wässrigem Medium, bevorzugt für organische Farbstoffe und Pigmente, z.B. zur Herstellung von Formierungen oder zum Einsatz im Färbebad. Sie finden weiterhin Verwendung als Verflüssiger für Mischungen von organischen oder anorganischen Verbindungen mit Wasser, z.B. für Metalloxide oder für Zement.

Die Verbindungen finden ebenfalls Verwendung als Gerbstoffe für Leder.

Die Verwendung als Dispergiermittel und Verflüssiger ist bevorzugt.

Beispiel 1

188 g Phenol und 100 g $H_2SO_4$ werden zusammengegeben, dann wird bei 120 - 140°C und Vakuum eine Mischung aus Wasser und wenig Phenol abdestilliert, bis 1 g der Reaktionsmischung noch 2,85 mVal Säure enthält. Es werden 200 g $H_2O$ sowie das abdestillierte Phenol zugegeben und soviel 45 %ige Natronlauge bis ein pH-Wert von 7,2 erreicht ist. Dann werden 150 g 30 %ige Formaldehydlösung zugesetzt, es wird eine Stunde zum Rückfluß erhitzt, nach Zugabe von 260 g 40 %iger $NaHSO_3$-Lösung weiter zwei Stunden am Rückfluß gekocht. Dann werden weitere 150 g 30 %ige Formaldehydlösung zugegeben, und es wird unter Überdruck vier Stunden auf 120°C erhitzt. Es entsteht eine dunkelbraune klare Lösung.

Beispiel 2

188 g Phenol und 100 g $H_2SO_4$ werden zusammengegeben, dann wird bei 120 - 140°C im Vakuum eine Mischung aus Wasser und wenig Phenol abdestilliert, bis 1 g der Reaktionsmischung noch 2,95 mVal Säure enthält. Das Destillat und 200 g $H_2O$ werden zur Reaktionsmischung gegeben, außerdem soviel 45 %ige Natronlauge, bis ein pH-Wert von 7,2 erreicht ist. Nach Zugabe von 150 g 30 %iger Formaldehydlösung wird eine Stunde zum Rückfluß erhitzt, dann werden 195 g

40 %ige $NaHSO_3$-Lösung zugegeben, es wird weitere zwei Stunden zum Sieden erhitzt, mit weiteren 125 g 30 %iger Formaldehydlösung versetzt und sechs Stunden am Rückfluß gekocht. Es entsteht eine dunkelbraune klare Lösung.

Beispiel 3

188 g Phenol und 100 g $H_2SO_4$ werden zusammengegeben dann wird bei 120 - 140°C und Vakuum eine Mischung aus Wasser und wenig Phenol abdestilliert, bis 1 g der Reaktionsmischung noch 2,98 mVal Säure enthält. Das Destillat und 200 g $H_2O$ werden zur Reaktionsmischung gegeben, außerdem soviel 45 %ige Natronlauge, bis ein pH-Wert von 7,2 erreicht ist. Nach Zugabe von 150 g 30 %iger Formaldehydlösung wird eine Stunde zum Rückfluß erhitzt, dann werden 169 g 40 %ige $NaHSO_3$-Lösung zugegeben, es wird weitere zwei Stunden zum Sieden erhitzt, mit weiteren 115 g 30 %iger Formaldehydlösung versetzt und sechs Stunden am Rückfluß gekocht. Es entsteht eine dunkelbraune, klare Lösung.

Beispiel 4

118 g Phenol und 130 g $H_2SO_4$ werden zusammengegeben, dann wird bei 120 - 140°C und Vakuum eine Mischung aus Wasser und wenig Phenol abdestilliert bis 1 g der

Reaktionsmischung noch 3,42 mVal Säure enthält. Das Destillat und 200 g Wasser werden zur Reaktionsmischung gegeben, außerdem soviel 45 %ige Natronlauge, bis ein pH-Wert von 7,2 erreicht ist. Nach Zugabe von 150 g 30 %iger Formaldehydlösung wird eine Stunde zum Rückfluß erhitzt, dann werden 169 g 40 %ige $NaHSO_3$-Lösung zugegeben, es wird weitere zwei Stunden zum Sieden erhitzt, mit weiteren 115 g 30 %iger Formaldehydlösung versetzt und fünf Stunden am Rückfluß gekocht. Es entsteht eine dunkelbraune, klare Lösung.

Der pH-Wert der gemäß Beispiel 1 - 4 erhaltenen Lösungen liegt zwischen 6 und 6,5.

<u>Beispiele 5 - 8</u>

Färbung aus Polyesterfasern
Garne aus Polyesterfasern werden im Flottenverhältnis von 1:40 in ein auf 60°C erwärmtes Bad eingebracht, das im Liter 0,25 g eines Farbstoffs der Formel

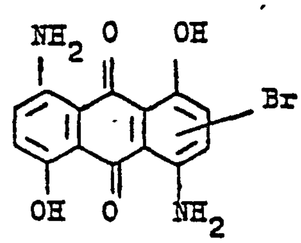

und 2 g je eines nach Beispiel 1 - 4 hergestellten Kondensationsprodukte enthält. Der pH-Wert des Bades wird mit Essigsäure auf 4,5 - 5 eingestellt. Dann wird das Bad auf 125°C erhitzt und 60 Minuten bei

dieser Temperatur gehalten. Man erhält eine gleichmäßige stippenfreie Blaufärbung.

Beispiele 9 - 10

54 g folgenden Farbstoffs: 2:1 Chromkomplex des Azofarbstoffs 2-Amino-1-oxybenzol-4-ethylsulfon ⟶ 1-Methylsulfonylamin-7-naphthol werden mit 38 g des nach Beispiel 1 hergestellten Kondensats versetzt und als ca. 70 %ige wäßriger Dispersion in einer Perlmühle gemahlen. Anschließend wird in einem Sprühtrockner bei 180°C Eingangs- und bei 80°C Ausgangstemperatur getrocknet. Man erhält einen Farbstoff mit sehr guter Kalt- sowie Heißlöslichkeit, der zum Färben von Textilien aus natürlichen sowie synthetischen Polyamiden in einem Grauton sehr gut geeignet ist.

Gleich gute Ergebnisse werden auch dann erzielt, wenn anstelle des Produktes aus Beispiel 1 ein Produkt gemäß Beispiel 4 verwendet wird.

Beispiel 11

50 g des Farbstoffs C.I. Disperse Yellow 99 (C.I. 48 420) werden mit 154 g der nach Beispiel 2 hergestellten Verbindung angeschlagen und zweimal als ca. 35 %ige Dispersion in einer Perlmühle gemahlen. Anschließend wird in einem Sprühtrockner bei 180°C Eintrittstemperatur und 80°C Austrittstemperatur getrocknet. Man erhält

eine Farbstoffeinstellung mit guter Dispergierbarkeit, die sehr gut zum Drucken und Färben von Textilien aus Polyester in einem gelben Farbton geeignet ist.

Beispiel 12

60 g des Farbstoffs C.I. Disperse Blue 73 (C.I. 63 265) werden mit 141 g der nach Beispiel 4 hergestellten Verbindung angeschlagen, zweimal als eine ca. 35 %ige Dispersion in einer Perlmühle gemahlen und anschließend in einem Sprühtrockner bei 180°C Eintrittstemperatur und 80°C Austrittstemperatur getrocknet. Man erhält eine Farbstoffeinstellung, die sehr gut zum Drucken und Färben von Textilien aus Polyester in einem blauen Farbton geeignet ist.

Patentansprüche:

1) Polykondensate aus Phenolen und Formaldehyd, die Sulfonsäuregruppen und deren Salze enthalten, die sowohl direkt als auch über eine Methylenbrücke an das Phenol gebunden sind, dadurch gekennzeichnet, daß sie durch Umsetzung eines neutralisierten Reaktionsproduktes aus Phenolen mit Sulfonierungsmitteln, das eine Mischung von Ausgangsphenol, Phenolsulfonsäure und Bis-(hydroxyphenyl)-sulfonen enthält, mit Formaldehyd und einem Bisulfit bei einem pH-Wert von 4 - 8 hergestellt werden.

2) Polykondensate nach Anspruch 1), dadurch gekennzeichnet, daß sie aus einkernigen, nichtkondensierten Phenolen hergestellt werden.

3) Polykondensate nach Anspruch 1, dadurch gekennzeichnet, daß sie in einer Einkesselreaktion hergestellt werden durch Umsetzung von 1 Mol des Phenols mit 0,3 - 0,9 Mol Sulfonierungsmittel im stark sauren Medium, Neutralisation auf einen pH-Wert von 7-8, weitere Umsetzung mit 0,6 - 2 Mol Formaldehyd und anschließend bei einem pH-Wert von 4 - 8 mit 0,3 - 0,9 Mol Bisulfit und 0 - 1,5 Mol Formaldehyd.

4) Verfahren zur Herstellung von Polykondensaten aus Phenolen und Formaldehyd, die Sulfonsäuregruppen und deren Salze enthalten, die sowohl direkt als auch über eine Methylenbrücke an das Phenol gebunden sind, dadurch gekennzeichnet, daß man das neutralisierte Reaktionsprodukt aus Phenolen mit Sulfonierungsmitteln, das eine Mischung von Ausgangsphenol, Phenolsulfonsäure und Bis-(hydroxyphenyl/-sulfon enthält, mit Formaldehyd und einem Bissulfit bei einem pH-Wert von 4-8 umsetzt.

5) Verwendung der Polykondensate nach Anspruch 1) als Dispergiermittel und Verflüssiger.

6) Mittel enthaltend ein Polykondensat nach Anspruch 1).

0026314

Europäisches Patentamt

# EUROPÄISCHER TEILRECHERCHENBERICHT,
der nach Regel 45 des Europäischen Patent-übereinkommens für das weitere Verfahren als europäischer Recherchenbericht gilt

Nummer der Anmeldung
EP 80 10 4887.7

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - C - 677 126 (J.R. GEIGY)<br>* Beispiel 4 *<br>-- | 1-5 |
| A | DE - B - 2 301 638 (BASF)<br>* Spalte 1, Zeilen 28 bis 65 *<br>-- | 1-5 |
| A | DE - A1 - 2 609 531 (BAYER)<br>* Seite 3, Absatz 3; Beispiel 1 *<br>-- | 1-5 |
| A | GB - A - 1 474 331 (CASSELLA)<br>* Seite 2, Zeilen 42 bis 54, 90 bis 109 *<br>---- | 5 |

KLASSIFIKATION DER ANMELDUNG (Int.Cl.³)

C 08 G 8/18
B 01 F 17/52
//C 14 C 3/20

RECHERCHIERTE SACHGEBIETE (Int. Cl.³)

B 01 F 17/00
C 07 C 143/50
C 08 G 8/00
C 14 C 3/00

## UNVOLLSTÄNDIGE RECHERCHE

Nach Auffassung der Recherchenabteilung entspricht die vorliegende europäische Patentanmeldung den Vorschriften des Europäischen Patentübereinkommens so wenig, daß es nicht möglich ist, auf der Grundlage einiger Patentansprüche sinnvolle Ermittlungen über den Stand der Technik durchzuführen.

Vollständig recherchierte Patentansprüche: 1-5
Unvollständig recherchierte Patentansprüche: --
Nicht recherchierte Patentansprüche: 6
Grund für die Beschränkung der Recherche: Unklarheiten

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| Recherchenort | Abschlußdatum der Recherche | Prüfer |
|---|---|---|
| Berlin | 16-12-1980 | KRAIL |